# EUROPÄISCHE PATENTANMELDUNG

(11) **EP 2 275 654 A2**
(43) Veröffentlichungstag der Anmeldung: **19.01.2011**
(21) Anmeldenummer: 10006618.2
(22) Anmeldetag: 25.06.2010
(51) Int. Cl.: F02B 29/04

(54) **Einrichtung zur Ladeluftkühlung sowie Verfahren zum Betreiben derselben**

(30) Priorität: 17.07.2009 DE 102009033656
(71) Anmelder: Bayerische Motoren Werke, 80809 München (DE)
(72) Erfinder: Vogel, Stefan, 80538 München (DE)

(57) **Zusammenfassung**

Einrichtung zur Ladeluftkühlung für eine aufgeladene Kraftfahrzeug-Brennkraftmaschine, wobei die Phasenwechselenthalpie eines Phasenwechselmediums zur Wärmeübertragung von der Ladeluft zu dem Phasenwechselmedium genutzt wird, sowie Verfahren zum Betreiben derselben.

## Beschreibung

Die Erfindung betrifft eine Einrichtung zur Ladeluftkühlung für eine aufgeladene Kraftfahrzeug-Brennkraftmaschine sowie ein Verfahren zum Betreiben einer derartigen Einrichtung.

Zur Leistungssteigerung von Kraftfahrzeug-Brennkraftmaschine ist es bekannt, den Gemischdurchsatz pro Arbeitstakt durch Verdichtung der zugeführten Luft zu erhöhen. Derartige Brennkraftmaschinen werden als "aufgeladen" bezeichnet.

Eine noch weitere Leistungssteigerung sowie eine Steigerung des Wirkungsgrades kann dadurch erreicht werden, dass die Temperatur der zugeführten Luft verringert wird, sodass bei gleichem Volumen eine größere Luftmenge zugeführt und mehr Kraftstoff verbrannt werden kann. Zur Kühlung der zugeführten Luft werden Ladeluftkühler verwendet.

Dabei kann die Ladeluft direkt mittels eines Ladeluft-Kühlluft-Wärmetauschers gekühlt werden, wobei die dem Ladeluftmassenstrom entzogene Wärme auf einen Kühlluftmassenstrom übertragen und abgeführt wird. Eine andere Möglichkeit besteht darin, einen Ladeluft-Kühlflüssigkeit-Wärmetauscher vorzusehen und die dem Ladeluftmassenstrom entzogene Wärme auf ein flüssiges Kühlmittel zu übertragen. In einem weiteren Schritt kann dann die Wärme mittels eines weiteren Wärmetauschers abgeführt werden.

Ladeluft-Kühlsysteme sind üblicherweise auf den höchsten Ladeluft-Kühlbedarf ausgelegt. In weiten Betriebsbereichen besteht jedoch ein deutlich geringerer Kühlbedarf, sodass die Ladeluft-Kühlsysteme dort überdimensioniert sind und in weiten Betriebsbereichen der Brennkraftmaschine nur ein Teil der Leistung des Ladeluft-Kühlsystems abgerufen wird.

Der Erfindung liegt daher die Aufgabe zugrunde, eine eingangs genannte Einrichtung zur Ladeluftkühlung sowie ein Verfahren zum Betreiben derselben bereitzustellen, mit dem eine an einem maximalen Ladeluft-Kühlbedarf orientierte Überdimensionierung vermieden werden kann.

Die Lösung der Aufgabe erfolgt mit einer Einrichtung zur Ladeluftkühlung mit den Merkmalen des Anspruchs 1, durch Nutzung der Phasenwechselenthalpie eines Phasenwechselmediums zur Wärmeübertragung von der Ladeluft zu dem Phasenwechselmedium sowie mit einem Verfahren zum Betreiben einer derartigen Einrichtung gemäß Anspruch 10, indem eine Wärmeübertragung von der Ladeluft zu dem Phasenwechselmedium bedarfsweise bei besonders hohem Ladeluft-Kühlbedarf erfolgt und mit einem Verfahren zum Betreiben einer derartigen Einrichtung gemäß Anspruch 13, indem eine Wärmeübertragung von der Ladeluft zu dem Phasenwechselmedium zumindest zeitweise kontinuierlich erfolgt.

Das Phasenwechselmedium ist in der Lage, auf einem geeigneten Temperaturniveau einen endothermen Phasenwechsel durchzuführen und dabei Wärme aufzunehmen, das heißt einen Wechsel vom festen in den flüssigen oder gasförmigen oder vom flüssigen in den gasförmigen Aggregatzustand zu durchlaufen. Die Nutzung der Phasenwechselenthalpie des Phasenwechselmediums zur Wärmeübertragung von der Ladeluft zu dem Phasenwechselmedium ermöglicht es, Ladeluft-Kühlbedarf-Spitzen abzufangen, sodass die bekannten Komponenten der Einrichtung, insbesondere Wärmetauscher, kleiner dimensioniert und damit Bauraumausnutzung, Kosten und Gewicht optimiert werden können. Dabei kann die Wärmeübertragung von der Ladeluft zu dem Phasenwechselmedium unmittelbar oder mittelbar unter Zwischenschaltung weiterer Wärmeübergänge erfolgen.

Indem eine Wärmeübertragung von der Ladeluft zu dem
Phasenwechselmedium bedarfsweise bei besonders hohem Ladeluft-Kühlbedarf erfolgt, kann die Einrichtung zur Ladeluftkühlung weitgehend in ihrem optimalen Betriebsbereich betrieben werden und es verbleiben zwischen Betriebsbereichen mit besonders hohem Ladeluft-Kühlbedarf Betriebsbereiche, in denen eine Verwendung des Phasenwechselmediums zur Ladeluftkühlung nicht erforderlich ist. Wenn eine Wärmeübertragung von der Ladeluft zu dem Phasenwechselmedium zumindest zeitweise kontinuierlich erfolgt, besteht die Möglichkeit, die bekannten Komponenten der Einrichtung, insbesondere Wärmetauscher, in weiten Betriebsbereichen zu unterstützen.

Besonders zu bevorzugende Ausführungen und Weiterbildungen der erfindungsgemäßen Einrichtung und des erfindungsgemäßen Verfahrens sind Gegenstand der Unteransprüche.

Vorzugsweise erfolgt bei einer Einrichtung zur Ladeluftkühlung, die einen Wärmetauscher zur Wärmeübertragung von der Ladeluft zu einem Wärmeübertragungsfluid aufweist, eine Wärmeübertragung von der Ladeluft und/oder dem Wärmeübertragungsfluid zu dem Phasenwechselmedium. Damit kann mittels des Phasenwechselmediums der Ladeluft unmittelbar oder mittelbar über das Wärmeübertragungsfluid Wärme entzogen werden.

Als sehr zweckmäßig hat es sich erwiesen, wenn bei einer Einrichtung zur Ladeluftkühlung, bei der das Wärmeübertragungsfluid Kühlluft und der Wärmetauscher ein Ladeluft-Kühlluft-Wärmetauscher ist, eine Wärmeübertragung von der Ladeluft und/oder der Kühlluft zu dem Phasenwechselmedium erfolgt.

Wenn die Einrichtung zur Ladeluftkühlung einen ersten Wärmetauscher zur Wärmeübertragung von der Ladeluft zu einem ersten Wärmeübertragungsfluid und einen zweiten Wärmetauscher zur Wärmeübertragung von dem ersten Wärmeübertragungsfluid zu einem zweiten Wärmeübertragungsfluid aufweist, ist es von Vorteil, wenn eine Wärmeübertragung von der Ladeluft und/oder dem ersten Wärmeübertragungsfluid und/oder dem zweiten Wärmeübertragungsfluid zu dem Phasenwechselmedium erfolgt.

Bei einer Einrichtung zur Ladeluftkühlung, bei der das erste Wärmeübertragungsfluid ein flüssiges Kühlmittel, der erste Wärmetauscher ein Ladeluft-Kühlflüssigkeit-Wärmetauscher, das zweite Wärmeübertragungsfluid Kühlluft und der zweite Wärmetauscher ein Kühlflüssigkeit-Kühlluft-Wärmetauscher ist, erfolgt zweckmäßigerweise eine Wärmeübertragung von der Ladeluft und/oder dem flüssigen Kühlmittel und/oder der Kühlluft zu dem Phasenwechselmedium.

Einem besonders vorteilhaften Ausführungsbeispiel der erfindungsgemäßen Einrichtung zufolge wird in einem exothermen Vorgang das Phasenwechselmedium in seine Ausgangsphase zurückgeführt und dabei Wärme von dem Phasenwechselmedium zur Ladeluft und/oder zum ersten Wärmeübertragungsfluid und/oder zum zweiten Wärmeübertragungsfluid zurück übertragen.

Einem anderen, ebenfalls sehr vorteilhaften Ausführungsbeispiel zufolge wird zur Regeneration es Wärmespeichers in einem exothermen Vorgang das Phasenwechselmedium in seine Ausgangsphase zurückgeführt und dabei Wärme von dem Phasenwechselmedium zur Ladeluft und/oder zum ersten Wärmeübertragungsfluid und/oder zum zweiten Wärmeübertragungsfluid und/oder zu einem dritten Wärmeübertragungsfluid übertragen.

Vorzugsweise umfasst die erfindungsgemäße Einrichtung zur Ladeluftkühlung wenigstens einen Wärmespeicher, der das Phasenwechselmedium enthält. Ein Wärmespeicher ist im vorliegenden Zusammenhang ein diskontinuierlich arbeitender Speicher, der in der Lage ist, in einer Speicherbetriebsphase Wärme aufzunehmen und diese in einer Regenerationsbetriebsphase wieder abzugeben. Außerdem ist es bevorzugt, wenn die Einrichtung wenigstens ein Wärmerohr (Heatpipe) umfasst, das das Phasenwechselmedium enthält. Ein Wärmerohr ist in diesem Zusammenhang ein zumindest zeitweise kontinuierlich arbeitender Wärmeübertrager, der in der Lage ist, an einer Stelle Wärme aufzunehmen und diese an anderer Stelle wieder abzugeben.

Bei einem Verfahren, bei dem eine Wärmeübertragung von der Ladeluft zu dem Phasenwechselmedium bedarfsweise bei besonders hohem Ladeluft-Kühlbedarf erfolgt, wird bevorzugt Wärme von der Ladeluft zu dem Phasenwechselmedium übertragen, wenn die Temperatur der Ladeluft eine vorbestimmte Höchsttemperatur überschreitet. Zweckmäßigerweise wird das Phasenwechselmedium bedarfsweise unter Wärmeabgabe wieder in seine Ausgangsphase zurückgeführt, wenn der Ladeluft-Kühlbedarf nicht erhöht ist.

Bei einem Verfahren, bei dem eine Wärmeübertragung von der Ladeluft zu dem Phasenwechselmedium zumindest zeitweise kontinuierlich erfolgt, wird das Phasenwechselmedium vorzugsweise zumindest zeitweise kontinuierlich unter Wärmeabgabe in seine Ausgangsphase zurückgeführt.

Nachfolgend ist ein besonders zu bevorzugendes Ausführungsbeispiel der Erfindung unter Bezugnahme auf Figuren näher erläutert, dabei zeigen schematisch und beispielhaft
- Figur 1: eine Einrichtung zur direkten Ladeluftkühlung mit Wärmespeicher,
- Figur 2: eine Einrichtung zur indirekten Ladeluftkühlung mit Wärmespeicher,
- Figur 3: eine Einrichtung zur Ladeluftkühlung mit Wärmerohr und
- Figur 4: Phasenübergangstemperaturen und Phasenwechselenthalpien ausgewählter Phasenwechselmedien im Druck-Temperatur- Diagramm.

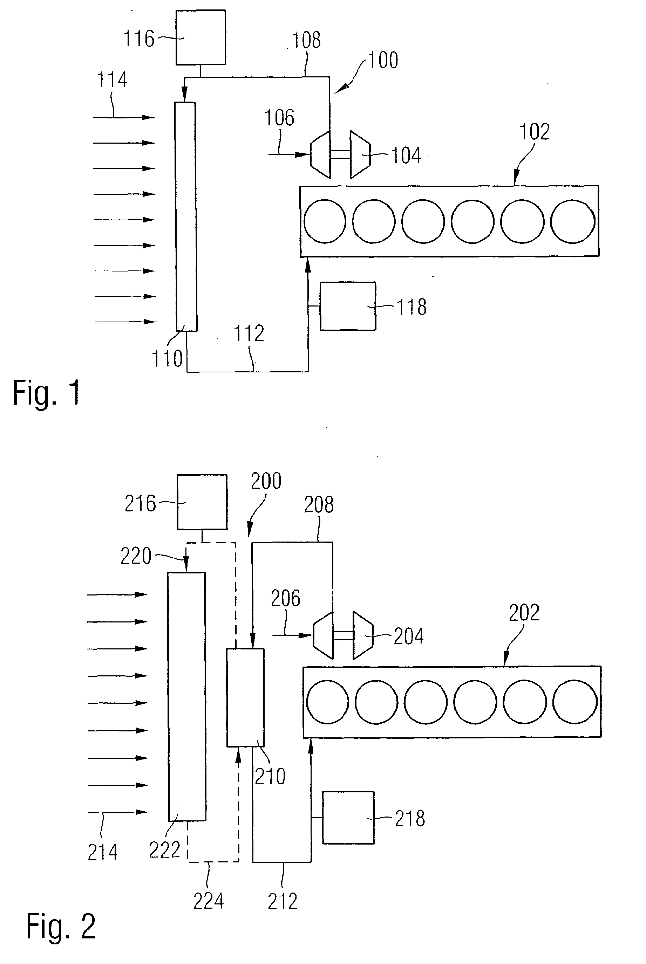

Figur 1 zeigt eine Einrichtung 100 zur Ladeluftkühlung für eine aufgeladene Kraftfahrzeug-Brennkraftmaschine 102. Zur Leistungssteigerung der Brennkraftmaschine 102 bei deren Betrieb ist ein Abgasturbolader 104 vorgesehen, mit dem die Energie des Abgasstroms genutzt werden kann. Der Abgasturbolader 104 umfasst in einem Gehäuse eine vom Abgasstrom angetriebene Pumpe und einen mit dieser mechanisch gekoppelten Verdichter, der den der Brennkraftmaschine 102 zugeführte Luftmassenstrom 106 verdichtet, sodass der Gemischdurchsatz pro Arbeitstakt erhöht wird.

Einem anderen, hier nicht dargestellten Ausführungsbeispiel zufolge kann auch eine parallele oder sequenzielle Mehrfachaufladung oder eine wechselnde Nutzung unterschiedlich dimensionierter Lader vorgesehen sein und/oder kann der Ladeluftmassenstrom auch auf andere Weise, beispielsweise mittels eines elektrisch oder mechanisch angetriebenen Kompressors, verdichtet werden.

Zur noch weiteren Leistungssteigerung sowie zur Steigerung des Wirkungsgrades der Brennkraftmaschine 102 wird mittels der Einrichtung 100 zur Ladeluftkühlung die Temperatur des zugeführten Ladeluftmassenstroms verringert, sodass bei gleichem Volumen eine größere Luftmenge zugeführt und mehr Kraftstoff verbrannt werden kann.

Vorliegend wird der Ladeluftmassenstrom direkt mittels eines Ladeluft-Kühlluft-Wärmetauschers 110 gekühlt. Der verdichtete Ladeluftmassenstrom 108 wird dafür zunächst dem Wärmetauscher 110, an dem Wärme an einen Kühlluftmassenstrom 114 übertragen und abgeführt wird, und nachfolgend als gekühlter und verdichteter Ladeluftmassenstrom 112 der Brennkraftmaschine 102 zugeführt. Einem anderen, hier nicht dargestellten Ausführungsbeispiel zufolge kann der Ladeluftmassenstrom auch zunächst gekühlt und nachfolgend verdichtet und/oder es können mehrere Wärmetauscher 110 parallel und/oder in Reihe verwendet werden.

Neben dem Wärmetauscher 110 ist zur Kühlung des Ladeluftmassenstroms 108 ein Wärmespeicher 116 vorgesehen. Der Wärmespeicher 116 ist mit dem Ladeluftmassenstrom 108 wärmeleitend verbunden und umfasst in einem Arbeitsraum ein Phasenwechselmedium, das in der Lage ist, auf einem geeigneten Temperaturniveau einen endothermen Phasenwechsel durchzuführen und dabei Wärme aufzunehmen, das heißt einen Wechsel vom festen in den flüssigen oder gasförmigen oder vom flüssigen in den gasförmigen Aggregatzustand.

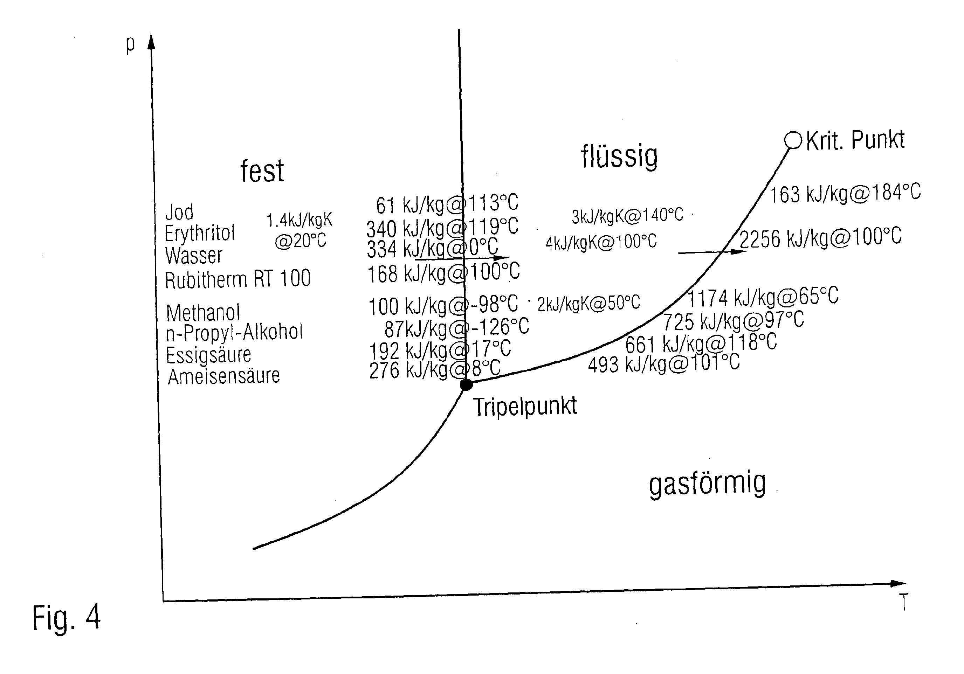

Das Phasenwechselmedium umfasst vorzugsweise einen oder mehrere der Stoffe Wasser, Jod, Erythritol, Rubitherm RT 100, Ethanol, Methanol, n-Propylalkohol, Essigsäure oder Ameisensäure. Im Druck-Temperatur-Diagramm in Figur 4 sind für diese Stoffe die Phasenübergangstemperaturen beim Übergang vom festen in den flüssigen und vom flüssigen in den gasförmigen Aggregatszustand und die zugehörigen Phasenwechselenthalpien bei einem Druck p=1 bar dargestellt. Es kann bei p=1 bar insbesondere im Bereich von ca. 65-200°C eine ca. 60-2260 kJ/kg entsprechende Wärmemenge aufgenommen werden.

Das Phasenwechselmedium wird abhängig von der zu erwartenden Höhe und Zeitdauer der instationär auftretenden Leistungsspitzen im Ladeluftsystem ausgewählt hinsichtlich Schmelz- bzw. Siedetemperatur (Einsatz-/Funktionsbeginn) und hinsichtlich Massebedarf an Phasenwechselmedium (Einsatz-/Funktionsdauer pro Zyklus).

Mit dem Wärmespeicher 116 können Ladeluft-Kühlbedarf-Spitzen abgefangen werden, das heißt ein Wärmeübergang vom Ladeluftmassenstrom auf das Phasenwechselmedium erfolgt nur bedarfsweise bei besonders hohem Ladeluft-Kühlbedarf. Dadurch können die übrigen Komponenten der Einrichtung 100, insbesondere Wärmetauscher, kleiner dimensioniert werden. Vorzugsweise ist der Wärmespeicher 116 in dem sich ergebenden freien Bauraum untergebracht. Der Wärmespeicher 116 kann jedoch auch in anderen geeigneten Bauräumen untergebracht werden, insbesondere da er in einer Anwendungsform lediglich Wärme speichert und ohne gesonderte Kühlung arbeitet.

Eine Regeneration des Wärmespeichers 116 erfolgt ebenfalls bedarfsweise wenn der Ladeluft-Kühlbedarf nicht erhöht ist, also zwischen Ladeluft-Kühlbedarf-Spitzen. Dabei wird das Phasenwechselmedium unter Wärmeabgabe in seinen Ausgangsaggregatzustand zurückgeführt. Die abgegebene Wärme wird an den Ladeluftmassenstrom und/oder an den Kühlluftmassenstrom und/oder an ein anderes Wärmeübertragungsfluid, insbesondere an ein Wärmeübertragungsfluid einer ohnehin vorhandenen Kühleinrichtung, wie Kühleinrichtung der Brennkraftmaschine 102, übertragen und abgeführt.

Der Wärmespeicher 116 kann auch an andere Stelle mit dem Ladeluftmassenstrom wärmeleitend verbunden sein. Insbesondere kann der Wärmespeicher auch dem Ladeluftmassenstrom 112 stromabwärts des Wärmetauschers 110 zugeordnet sein. In Figur 1 ist diese Position des Wärmespeichers mit 118 bezeichnet. Es können auch mehr als ein Wärmespeicher vorgesehen sein, beispielsweise ein Wärmespeicher 116 und ein Wärmespeicher 118, wobei die mehreren Wärmespeicher an geeigneter Position mit dem (Lade-)Luftmassenstrom 106, 108 und/oder 112 verbunden sind.

Geeignete Zusätze im Phasenwechselmedium verhindern bei dessen Regeneration eine Unterkühlung, insbesondere wird verhindert, dass das Phasenwechselmedium unterhalb seiner Schmelztemperatur noch flüssig bzw. unterhalb seiner Siedetemperatur noch gasförmig vorliegt.

Figur 2 zeigt eine Einrichtung 200 zur Ladeluftkühlung für eine aufgeladene Kraftfahrzeug-Brennkraftmaschine 202. Zur Leistungssteigerung der Brennkraftmaschine 202 bei deren Betrieb ist ein Abgasturbolader 204 vorgesehen. Zum Abgasturbolader 204 wird auf die Beschreibung des in Figur 1 gezeigten Abgasturboladers 104 verwiesen, die auch auf den Abgasturbolader 204 zu lesen ist.

Bei dem in Figur 2 gezeigten Ausführungsbeispiel wird der Ladeluftmassenstrom indirekt gekühlt, indem zunächst mittels eines Ladeluft-Kühlflüssigkeit-Wärmetauschers 210 Wärme von dem verdichteten Ladeluftmassenstrom 208 auf ein flüssiges Kühlmittel und nachfolgend mittels eines Kühlflüssigkeit-Kühlluft-Wärmetauschers 222 Wärme vom flüssigen Kühlmittel auf einen Kühlluftmassenstrom 214 übertragen und abgeführt wird. Das flüssige Kühlmittel strömt dabei in einem Kreislauf, wobei der Kühlmittelstrom 224 am Wärmetauscher 210 Wärme aufnimmt und der wärmebeladene Kühlmittelstrom 220 am Wärmetauscher 222 wieder gekühlt wird. Der verdichtete und gekühlte Ladeluftmassenstrom 212 wird der Brennkraftmaschine 202 zugeführt. Einem anderen, hier nicht dargestellten Ausführungsbeispiel zufolge kann der Ladeluftmassenstrom auch zunächst gekühlt und nachfolgend verdichtet und/oder es können mehrere Wärmetauscher 210, 222 parallel und/oder in Reihe verwendet werden.

Neben dem Wärmetauscher 210 ist zur Kühlung des Ladeluftmassenstroms 212 ein Wärmespeicher 218 vorgesehen. Der Wärmespeicher 218 ist mit dem Ladeluftmassenstrom 212 wärmeleitend verbunden und umfasst in einem Arbeitsraum ein Phasenwechselmedium. Hinsichtlich des Wärmespeichers 218 und des Phasenwechselmediums sowie dessen Arbeitsweise wird auf die Beschreibung zur Figur 1 und 4 verwiesen.

Der Wärmespeicher 218 kann mit dem Ladeluftmassenstrom auch an anderer Stelle wärmeleitend verbunden sein, gegebenenfalls können mehrere Wärmespeicher mit dem Ladeluftmassenstrom wärmeleitend verbunden sein.

Alternativ oder zusätzlich ist ein Wärmespeicher 216 vorgesehen, der mit dem Kühlmittelstrom 220, 224 wärmeleitend verbunden ist. Der Wärmespeicher 216 kann mit dem Kühlmittelstrom ebenfalls an anderer Stelle wärmeleitend verbunden sein, auch können gegebenenfalls mehrere Wärmespeicher mit dem Kühlmittelstrom wärmeleitend verbunden sein.

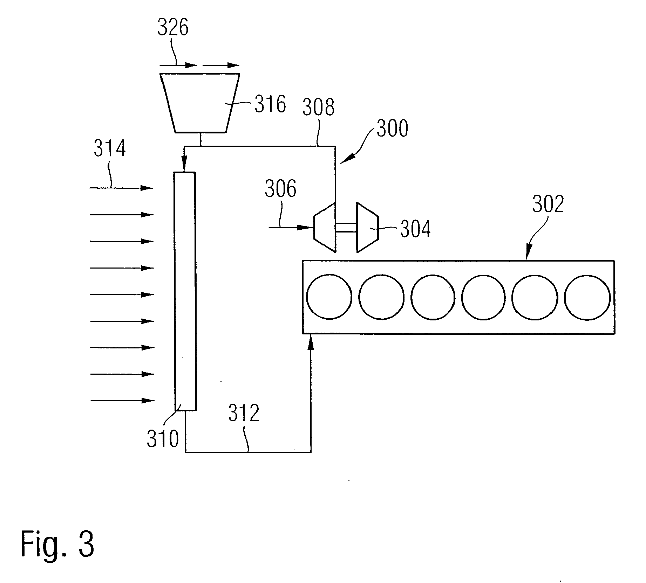

Figur 3 zeigt eine Einrichtung 300 zur direkten Ladeluftkühlung. Der Verbrennungsluftmassenstrom 306 wird mittels eines Turbolader 304 verdichtet, der verdichtete Ladeluftmassenstrom 308 wird mittels eines Ladeluft-Kühlluft-Wärmetauschers 310 direkt gekühlt und der verdichtete und gekühlte Ladeluftmassenstrom 312 wird der Brennkraftmaschine zugeführt.

Neben dem Wärmetauscher 310 ist zur Kühlung des Ladeluftmassenstroms 308 ein Wärmerohr (Heatpipe) 316 vorgesehen. Das Wärmerohr 316 umfasst in einem Arbeitsraum ein Phasenwechselmedium. Der Arbeitsraum weist einen ersten Bereich zur Wärmeaufnahme und einen zweiten Bereich zur Wärmeabgabe auf. Der erste Bereich des Arbeitsraums des Wärmerohr 316 ist zur Wärmeaufnahme mit dem Ladeluftmassenstrom wärmeleitend verbunden, der zweite Bereich des Arbeitsraums des Wärmerohr 316 ist zur Wärmeabgabe wärmeleitend mit einem Wärmeübertragungsfluid 326 verbunden. Eine Wärmeübertragung zwischen erstem und zweitem Bereich des Arbeitsraums des Wärmerohr 316 erfolgt mittels des Phasenwechselmediums, das in der Lage ist, auf einem geeigneten Temperaturniveau bei einem endothermen Phasenwechsel im ersten Bereich des Arbeitsraums des Wärmerohr 316 Wärme aufzunehmen und diese bei einem exothermen Phasenwechsel im zweiten Bereich des Arbeitsraums des Wärmerohr 316 wieder abzugeben.

Vorzugsweise ist das Wärmerohr 316 so angeordnet, dass der wärmeabgebende zweite Bereich seines Arbeitsraums in der Nähe einer ohnehin vorhandenen Kühleinrichtung, wie Kühleinrichtung der Brennkraftmaschine 102, liegt, sodass eine Wärmeabfuhr über diese Kühleinrichtung erfolgen kann.

Das Wärmerohr 316 arbeitet zumindest zeitweise kontinuierlich und kann so die Kühlung der Ladeluft maßgeblich unterstützen.

In diesem Zusammenhang wird auf die Figuren 1, 2 und 4 und deren Beschreibung verwiesen. Insbesondere kann das Wärmerohr 316 auch bei einer Einrichtung zur indirekten Ladeluftkühlung eingesetzt werden, das Wärmerohr 316 kann an unterschiedlichster Stelle zur direkten oder indirekten Wärmeaufnahme vom Ladeluftmassenstrom angeordnet sein, es können mehrere Wärmerohre 316 vorgesehen sein und/oder ein oder mehrere Wärmerohre 316 können mit einem oder mehreren Wärmespeichern (116, 118, 216, 218) kombiniert sein.

## Patentansprüche

1. Einrichtung (100, 200, 300) zur Ladeluftkühlung für eine aufgeladene Kraftfahrzeug-Brennkraftmaschine (102, 202, 302), **gekennzeichnet durch** eine Nutzung der Phasenwechselenthalpie eines Phasenwechselmediums zur Wärmeübertragung von der Ladeluft zu dem Phasenwechselmedium.

2. Einrichtung (100, 200, 300) nach Anspruch 1 mit einem Wärmetauscher (110, 210, 310) zur Wärmeübertragung von der Ladeluft zu einem Wärmeübertragungsfluid, **gekennzeichnet durch** eine Wärmeübertragung von der Ladeluft und/oder dem Wärmeübertragungsfluid zu dem Phasenwechselmedium.

3. Einrichtung (100, 300) nach einem der vorhergehenden Ansprüche, wobei das Wärmeübertragungsfluid Kühlluft und der Wärmetauscher (110, 310) ein Ladeluft-Kühlluft-Wärmetauscher ist, **gekennzeichnet durch** eine Wärmeübertragung von der Ladeluft und/oder der Kühlluft zu dem Phasenwechselmedium.

4. Einrichtung (200) nach einem der vorhergehenden Ansprüche mit einem ersten Wärmetauscher (210) zur Wärmeübertragung von der Ladeluft zu einem ersten Wärmeübertragungsfluid und einem zweiten Wärmetauscher (222) zur Wärmeübertragung von dem ersten Wärmeübertragungsfluid zu einem zweiten Wärmeübertragungsfluid, **gekennzeichnet durch** eine Wärmeübertragung von der Ladeluft und/oder dem ersten Wärmeübertragungsfluid und/oder dem zweiten Wärmeübertragungsfluid zu dem Phasenwechselmedium.

5. Einrichtung (200) nach einem der vorhergehenden Ansprüche, wobei das erste Wärmeübertragungsfluid ein flüssiges Kühlmittel, der erste Wärmetauscher (210) ein Ladeluft-Kühlflüssigkeit-Wärmetauscher, das zweite Wärmeübertragungsfluid Kühlluft und der zweite Wärmetauscher (222) ein Kühlflüssigkeit-Kühlluft-Wärmetauscher ist, **gekennzeichnet durch** eine Wärmeübertragung von der Ladeluft und/oder dem flüssigen Kühlmittel und/oder der Kühlluft zu dem Phasenwechselmedium.

6. Einrichtung (100, 200) nach einem der vorhergehenden Ansprüche, **gekennzeichnet durch** eine Wärmerückübertragung von dem Phasenwechselmedium zur Ladeluft und/oder zum ersten Wärmeübertragungsfluid und/oder zum zweiten Wärmeübertragungsfluid unter Rückführung des Phasenwechselmediums in seine Ausgangsphase.

7. Einrichtung (100, 200, 300) nach einem der vorhergehenden Ansprüche, **gekennzeichnet durch** eine Wärmeübertragung von dem Phasenwechselmedium zur Ladeluft und/oder zum ersten Wärmeübertragungsfluid und/oder zum zweiten Wärmeübertragungsfluid und/oder zu einem dritten Wärmeübertragungsfluid unter Rückführung des Phasenwechselmediums in seine Ausgangsphase.

8. Einrichtung (100, 200) nach einem der vorhergehenden Ansprüche, **gekennzeichnet durch** wenigstens einen Wärmespeicher (116, 118, 216, 218), enthaltend das Phasenwechselmedium.

9. Einrichtung (300) nach einem der vorhergehenden Ansprüche, **gekennzeichnet durch** wenigstens ein Wärmerohr (326), enthaltend das Phasenwechselmedium.

10. Verfahren zum Betreiben einer Einrichtung (100, 200) zur Ladeluftkühlung nach einem der Ansprüche 1-9, **dadurch gekennzeichnet, dass** eine Wärmeübertragung von der Ladeluft zu dem Phasenwechselmedium bedarfsweise bei besonders hohem Ladeluft-Kühlbedarf erfolgt.

11. Verfahren nach Anspruch 10, **dadurch gekennzeichnet, dass** eine Wärmeübertragung von der Ladeluft zu dem Phasenwechselmedium erfolgt, wenn die Temperatur der Ladeluft eine vorbestimmte Höchsttemperatur überschreitet.

12. Verfahren nach einem der Ansprüche 10-11, **dadurch gekennzeichnet, dass** das Phasenwechselmedium bedarfsweise unter Wärmeabgabe in seine Ausgangsphase rückgeführt wird, wenn der Ladeluft-Kühlbedarf nicht erhöht ist.

13. Verfahren zum Betreiben einer Einrichtung (300) zur Ladeluftkühlung nach einem der Ansprüche 1-9, **dadurch gekennzeichnet, dass** eine Wärmeübertragung von der Ladeluft zu dem Phasenwechselmedium zumindest zeitweise kontinuierlich erfolgt.

14. Verfahren nach Anspruch 13, **dadurch gekennzeichnet, dass** das Phasenwechselmedium zumindest zeitweise kontinuierlich unter Wärmeabgabe in seine Ausgangsphase rückgeführt wird.
